# EUROPEAN PATENT SPECIFICATION

(11) **EP 4 463 511 B1**
(45) Date of publication and mention of the grant of the patent: **02.09.2026**
(21) Application number: 22840715.1
(22) Date of filing: 20.12.2022
(51) Int. Cl.: C08L 7/00, C08L 9/00

(54) **CROSSLINKABLE COMPOSITION BASED ON AN ELASTOMER-CONTAINING POWDER OR GRANULE, AND ELASTOMER COMPOUNDS AND ARTICLES OBTAINABLE THEREFROM**
VERNETZBARE ZUSAMMENSETZUNG AUF BASIS EINES ELASTOMERHALTIGEN PULVERS ODER GRANULATS, UND DARAUS ERHÄLTLICHE ELASTOMERMASSEN UND GEGENSTÄNDE
COMPOSITION RÉTICULABLE À BASE D'UNE POUDRE OU DE GRANULES CONTENANT DE L'ÉLASTOMÈRE, ET MATIÈRES ÉLASTOMÈRES ET OBJETS AINSI OBTENUS

(30) Priority: 10.01.2022 EP 22150771
(43) Date of publication of application: 20.11.2024
(73) Proprietor: Evonik Operations GmbH, 45128 Essen (DE); Forward Engineering GmbH, 80797 München (DE)
(72) Inventor: ALTING, Kirsten, 48153 Münster (DE); PAASCHE, Alexander, 45721 Haltern am See (DE); NAGEL, Manfred, 48734 Reken (DE); BUSCHULTE, Tim, 80802 München (DE); MAIER, Robert, 80805 München (DE); VAN DER MEULEN, Leonie, 80687 München (DE); VAIKUNTAM, Sankar Raman, 50389 Wesseling (DE); KOCH, Philipp, 80799 München (DE)
(74) Representative: Evonik Patent Association
(86) International application number: PCT/EP2022/086977
(87) International publication number: WO 2023/131515

(56) References cited:
- EP-A1- 2 746 046
- DE-A1- 102007 029 644
- US-A1- 2007 100 085
- US-A1- 2010 160 079

## Description

The present invention relates to crosslinkable compositions based on an elastomer-containing powder or pelletized material, in particular composed of recycled material such as used tyres, comprising specific additives, and to elastomer compounds and articles obtainable therefrom, and to methods for the production thereof.

### Technical background

Rubber-elastic products are conventionally produced by shaping and crosslinking of highly viscous formulations based on crosslinkable materials such as raw rubber. In principle, elastomer-based powders or pelletized materials can also be processed to form rubber-elastic products by way of compression. Powders or pelletized materials such as those obtained in the recycling of used elastomer materials, for example used tyres, can be used here, this being desirable for reasons of sustainability. With a volume of around 1000 million used tyres that arise worldwide per year, used tyres represent a major environmental problem and at the same time a great economic potential for recycling opportunities, cf. for instance K. Formela "Sustainable development of waste tires recycling technologies - recent advances, challenges and future trends", Advanced Industrial and Engineering Polymer Research 4 (2021), 209-222. However, the material cohesion and the product quality are often comparatively poor when producing rubber-elastic products from elastomer-based powders or pelletized materials, and therefore the resulting products have restricted usability. Using additives makes it possible in this case to achieve certain improvements, although relevant product properties, such as mechanical properties or ageing resistance, remain inadequate for a plurality of relatively demanding applications. For example, the requirements for tennis balls are largely specified by the International Tennis Federation (ITF) and corresponding test methods have to be carried out for certification, cf. the brochure "ITF approved tennis balls, classified surfaces & recognized courts 2021 - a guide to products and test methods" published by the International Tennis Federation. In particular, tennis balls must therefore have a high degree of rebound, which is regularly not achieved in the case of production on the basis of elastomer-containing powders or pelletized materials. Tennis balls which are produced using a pelletized rubber composed of recycled tennis balls have recently become available on the market. However, in this case the pelletized rubber is mixed into a formulation based on raw rubber and accounts for merely around 30% by weight of the composition. It would be desirable to realize a significantly higher proportion of recycled elastomer-containing powders or pelletized materials, to exploit sources of raw materials that are considerable in terms of volume, such as used tyres, and at the same time to achieve good performance properties, including high rebound.

The present invention is therefore based on the object of providing a crosslinkable composition based on an elastomer-containing powder or pelletized material and crosslinked products obtainable therefrom, which at least partially reduce or eliminate the above-described disadvantages of the prior art. In particular, the crosslinkable composition should be producible in a cost-effective and efficient manner enabling the use of recycled materials that are available on a large scale, such as pelletized used tyres, and be processable to form rubber-elastic products having good material cohesion, ageing resistance and mechanical properties that satisfy even relatively demanding applications, such as high rebound, suitable for applications in tennis balls or the like.

### Summary of the invention

The underlying object is achieved according to the invention by a crosslinkable composition comprising:
(a) 50% by weight or more, based on the total weight of the crosslinkable composition, of a powder or pelletized material comprising at least one elastomer,
(b) 1 part by weight or more, based on 100 parts by weight of the elastomer-containing powder or pelletized material, of at least one poly-C₅-C₁₅-alkenamer,
(c) 1 part by weight or more, based on 100 parts by weight of the elastomer-containing powder or pelletized material, of at least one liquid polybutadiene, and
(d) 0.01 parts by weight or more, per part by weight of the cumulated poly-C₅-C₁₅-alkenamer and polybutadiene components of at least one crosslinking agent.

The present invention is also directed to elastomer compounds obtainable by crosslinking such crosslinkable compositions, and to articles comprising such an elastomer compound.

The invention also relates to a method for producing an elastomer compound or article containing the same. The method comprises:
providing a crosslinkable composition according to the invention as described above and in more detail below, and
crosslinking the crosslinkable composition.

Furthermore, the invention is directed to the use of at least one poly-C₅-C₁₅-alkenamer in combination with at least one liquid polybutadiene for processing elastomer in particulate form.

The crosslinkable composition according to the invention can be produced and processed in a cost-effective and efficient manner using commercially available starting materials and existing technology from the fields of powder processing and rubber processing. Use may be made here of high proportions, for example 70% by weight or more, based on the total weight of the composition, of recycled materials that are available on a large scale, such as pelletized used tyres. It has surprisingly been found that the crosslinkable compositions according to the invention can be processed to form elastomer compounds and rubber-elastic products that have good material cohesion and good mechanical properties that are resistant to ageing and can satisfy even relatively demanding applications. In particular, the elastomer compounds and products produced from the crosslinkable compositions according to the invention may have excellent rebound, as is required for instance for applications in tennis balls or the like.

Without wishing to be tied to a theory, it is assumed by the inventors that the additives used in the compositions according to the invention, poly-C₅-C₁₅-alkenamer and liquid polybutadiene, work together particularly effectively in their combination, effectively disperse the elastomer-based powder or pelletized material, activate it for crosslinking and enable the formation of a three-dimensional network incorporating the particles.

### Detailed description of the invention

As described above, the crosslinkable composition according to the present invention comprises a powder or pelletized material comprising at least one elastomer. A "powder" or "pelletized material" should in each case be understood here to mean a solid present in the form of a plurality of fine particles. These particles can typically move freely with respect to one another when the powder or pelletized material is agitated. The powder or pelletized material used in the context of the present invention is typically free-flowing. A "pelletized material" in the context of the present description here differs from a powder by the dimensions of the particles. Accordingly, reference is made herein to a "powder" when the particles have dimensions in the sub-millimetre range. In contrast, a "pelletized material" means particulate solids comprising larger particles having dimensions of >1 mm. Alternative terms such as "meal" (for example "rubber meal") or "grit" are sometimes used among experts to refer to pulverulent or pelletized material. Regardless of such an alternative name, such materials should also be regarded as powder or pelletized material in the sense of the present disclosure and can be used as such.

The powder or pelletized material used according to the invention comprises at least one elastomer. An "elastomer" is understood here to mean an elastically deformable polymer material. Elastomers are therefore dimensionally stable but elastic and return to their original shape again after deformation, i.e. have rubber-elastic properties. Examples of elastomers that the powder or pelletized material used according to the invention may comprise are, for instance, elastomers that are obtainable by wide-mesh crosslinking (also referred to as vulcanization) of natural rubber or synthetic rubber and also referred to as rubber materials, thermoplastic elastomers, or mixtures and combinations thereof. Natural rubber is obtained from the latex of the rubber tree (*Hevea brasiliensis*) and consists predominately of cis-1,4-polyisoprene. Examples of synthetic rubbers include, for instance, ethylene-propylene-diene rubbers (EPDM), styrene-diolefin rubbers, such as styrene-butadiene rubber (SBR), polybutadiene rubber, polyisoprene, styrene-isoprene rubber, butadiene-isoprene rubber, butyl rubber, such as isobutene-isoprene rubber, halobutyl rubber, such as chloro- or bromobutyl rubber, nitrile rubber, hydrogenated nitrile rubber, carboxylated butadiene-acrylonitrile rubber, styrene-butadiene-acrylonitrile rubber, carboxylated styrene-butadiene rubber, polychloroprene and epoxidized natural rubber. Polybutadiene rubber is a preferred natural rubber. Examples of thermoplastic elastomers include, for instance, thermoplastic polyamide elastomers, thermoplastic polyester elastomers, olefin-based thermoplastic elastomers, such as PP/EPDM, thermoplastic styrene block copolymers, and urethane-based thermoplastic elastomers.

The powder or pelletized material may comprise the at least one elastomer in an amount corresponding to at least 30% by weight, for example around at least 35% by weight or at least 40% by weight, or at least 50% by weight, based on the total weight of the powder or pelletized material. The powder or pelletized material may comprise up to 100% by weight of the at least one elastomer (i.e. consist of it in the case of 100%), for example 90% by weight or less, 80% by weight or less, 70% by weight or less, or 60% by weight or less, based on the total weight of the powder or pelletized material. The proportion of the elastomer may be in a range formed by any desired combination of abovementioned values, for example of 30% by weight to 100% by weight, or of 40% by weight to 80% by weight. The powder or pelletized material typically comprises at least 40% by weight, for instance 40% to 70% by weight, of the at least one elastomer, based on the total weight of the powder or pelletized material.

The powder or pelletized material used according to the invention typically comprises crosslinked natural rubber, one or more crosslinked synthetic rubbers, for example one or more of the abovementioned synthetic rubbers, or a mixture or combination thereof. Preferably, the powder or pelletized material comprises crosslinked natural rubber, as desired in a mixture with one or more crosslinked synthetic rubber(s). Particularly preferably, the powder or pelletized material comprises crosslinked natural rubber in an amount of 25% by weight or more, for instance 30% by weight or more, for instance 35% by weight or more, or 40% by weight or more, based on the total weight of the powder or pelletized material. The powder or pelletized material may for example comprise up to 100% by weight of crosslinked natural rubber, for instance 70% by weight or less, 50% by weight or less, or 40% by weight or less. The proportion of the crosslinked natural rubber may be in a range formed by any desired combination of abovementioned values, for example of 25% by weight to 70% by weight, or of 30% by weight to 40% by weight, based on the total weight of the powder or pelletized material.

The powder or pelletized material used according to the invention may preferably comprise at least one recycled elastomer. "Recycled elastomer" should be understood here to mean an elastomer which has already been used in a product and is recovered from this product, typically at the end of its intended use. For example, the recycled elastomer may comprise any one of the abovementioned elastomers or a mixture or combination thereof, for example in the abovementioned amounts. The product from which the recycled elastomer is recovered may be any desired elastomer-containing product or part or material thereof. Illustrative examples include, for instance, used tyres (such as car tyres, truck tyres, off-road tyres), or parts thereof, such as tyre treads or sidewalls, used conveyor belts, seals, shoe soles or other rubber products. The powder or pelletized material used according to the invention is preferably provided by a method for recycling used tyres or parts thereof. Particularly preferably, the powder or pelletized material may be provided by a method for recycling used truck tyres or parts thereof, for example tyre treads. Used truck tyres generally have a higher content of crosslinked natural rubber compared with car tyres.

Used tyre materials and methods for the recycling thereof are summarized, for instance, in K. Formela "Sustainable development of waste tires recycling technologies - recent advances, challenges and future trends", Advanced Industrial and Engineering Polymer Research 4 (2021), 209-222. To recycle used tyres, steel and fabric components are usually removed first and then the used tyre (part) to be recycled, after mechanical coarse comminution, is ground into a powder or pelletized material by grinding either at ambient temperature or cryogenically with nitrogen cooling. Other methods use comminution by means of water jets, for instance. Powders and pelletized materials obtained by recycling used tyres (used tyre parts) (also referred to as "ground tyre rubber" (GTR)) are commercially available from a multiplicity of suppliers such as MRH GmbH, Genan GmbH, or Roth International GmbH, at a fraction of the cost associated with the original production of corresponding elastomers.

The size of the particles in the powders or pelletized materials may be set as desired. This may be performed advantageously for instance by fractionation by means of sieves using a successive arrangement of sieves having different mesh sizes. Particles having dimensions larger than a sieve opening defined by the mesh size are retained by the corresponding sieve, and particles having smaller dimensions pass through the corresponding sieve. For example, the powders or pelletized materials used according to the invention may have a particle size of 5 mesh (4.0 mm) or less, or of 10 mesh (1.7 mm) or less, or of 16 mesh (1.0 mm) or less, or of 20 mesh (0.84 mm) or less, or of 24 mesh (0.71 mm) or less, or of 28 mesh (0.60 mm) or less, or of 32 mesh (0.50 mm) or less, or of 35 mesh (0.42 mm) or less, or of 42 mesh (0.35 mm) or less, or of 48 mesh (0.30 mm) or less, or of 60 mesh (0.25 mm) or less. For example, the powders or pelletized materials used according to the invention may have a particle size of 150 mesh (0.105 mm) or more, or of 115 mesh (0.125 mm) or more, or of 100 mesh (0.149 mm) or more, or of 80 mesh (0.18 mm) or more, or of 65 mesh (0.21 mm) or more. The powders or pelletized materials may have a particle size that is in a range formed by any desired combination of abovementioned values, for example of 150 mesh (0.105 mm) to 5 mesh (4.0 mm), or of 115 mesh (0.125 mm) to 20 mesh (0.84 mm), or of 65 mesh (0.21 mm) to 35 mesh (0.42 mm). For instance, use may preferably be made of a powder having particle sizes of 20 mesh (0.84 mm) or less, preferably 28 mesh (0.60 mm) or less, even more preferably 32 mesh (0.50 mm) or less, or 35 mesh (0.42 mm) or less, for example a powder having particle sizes in the range of 150 mesh (0.105 mm) to 20 mesh (0.84 mm), or in the range of 150 mesh (0.105 mm) to 28 mesh (0.60 mm) or in the range of 65 mesh (0.21 mm) to 35 mesh (0.42 mm). The above details relate to sieves from the Tyler standard series (cf., for instance, Chemiker-Kalender, H.U. von Vogel, Springer Verlag, 1956).

As is also known to those skilled in the art, powders or pelletized materials obtained from elastomer-containing products such as used tyres by way of a recycling process may comprise, in addition to the elastomer component, further constituents that are separated only partially, if at all, from the elastomer component during the recycling process. These further constituents may comprise any ingredients that are usually used in the recycled products or materials in addition to the elastomer component, for example residues of the agents used for the crosslinking of the elastomer, processing aids and/or additives such as pigments or fillers. Powders or pelletized materials from recycling of used tyres thus usually comprise not insignificant amounts of fillers such as carbon black and/or silica, and residues of the agents used for the crosslinking of the elastomer. The powder or pelletized material may for example comprise further constituents different from the elastomer component in an amount of up to 70% by weight, for instance 65% by weight or less, or 60% by weight or less, or 50% by weight or less, based on the total weight of the powder or pelletized material. The powder or pelletized material may comprise further constituents different from the elastomer component for example in an amount of 10% by weight or more, or 20% by weight or more, or 30% by weight or more, or 40% by weight or more, based on the total weight of the powder or pelletized material. The proportion of the further constituents different from the elastomer component, if present, may be in a range formed by any desired combination of abovementioned values, for example of 10% by weight to 70% by weight, or of 20% by weight to 60% by weight.

The crosslinkable composition may comprise an elastomer-containing powder or pelletized material as described in more detail above, or comprise a mixture or combination of one or more elastomer-containing powders with one or more elastomer-containing pelletized materials, or a mixture or combination of two or more elastomer-containing powders or a mixture or combination of two or more elastomer-containing pelletized materials.

The elastomer-containing powder and/or pelletized material usually constitutes the quantitatively predominant component of the crosslinkable composition. The crosslinkable composition may thus comprise the elastomer-containing powder and/or pelletized material for example in an amount corresponding to 50% by weight or more, or 60% by weight or more, or 70% by weight or more, or 75% by weight or more, or 80% by weight or more, or 85% by weight or more, or 90% by weight or more, based on the total weight of the crosslinkable composition. The elastomer-containing powder and/or pelletized material may for example be present in the crosslinkable composition in an amount of up to 95% by weight, or of 90% by weight or less, or of 85% by weight or less, based on the total weight of the crosslinkable composition. The proportion of the elastomer-containing powder and/or pelletized material may be in a range formed by any desired combination of abovementioned values, for example of 50% by weight to 95% by weight, or of 60% by weight to 85% by weight.

The crosslinkable composition according to the present invention further comprises at least one poly-C₅-C₁₅-alkenamer. The term "poly-C₅-C₁₅-alkenamer" herein means polymers comprising a base structure

-[(CH₂)ₓ-CH=CH]ₙ-

with x as an integer in the range of 3 to 13 and n>2, usually n>10, frequently n>50. These polymers may be present in open-chain form, in cyclic form or as a mixture of open-chain and cyclic molecules. Either one or more hydrogen atoms of the base structure may be substituted by one or more organic groups, for example alkyl groups, or the base structure is not substituted.

The poly-C₅-C₁₅-alkenamer component therefore introduces C=C double bonds, that can be crosslinked, into the composition. In addition, the poly-C₅-C₁₅-alkenamer component generally has good chemical compatibility with the elastomer component on account of the similar structure. The poly-C₅-C₁₅-alkenamer component can disperse the elastomer-containing powders or pelletized materials, fill interparticle spaces and wet the surfaces of the particles and activate them for crosslinking.

Examples of poly-C₅-C₁₅-alkenamers that may be used in the context of the present invention include, for instance, polypentenamer, polyhexenamer, polyheptenamer, polyoctenamer, poly(3-methyloctenamer), polydecenamer, poly(3-methyldecenamer), polydodecenamer, or mixtures and combinations thereof. Poly-C₅-C₁₅-alkenamers are obtainable by ring-opening metathesis polymerization of a corresponding cycloolefin, such as cyclopentene, cyclohexene, cycloheptene, cyclooctene, cyclodecene, cyclododecene or substituted derivatives thereof. The ring-opening metathesis polymerization reaction is catalyzed by Ziegler-Natta catalysts such as halides or acetylacetonates of W, Mo or Rh with AlEt₃ or AlEtCl₂ and an activator.

The at least one poly-C₅-C₁₅-alkenamer typically has a weight-average molecular weight (M_{w}) of 10 000 g/mol or more, for instance 20 000 g/mol or more, for instance 50 000 g/mol or more, for instance 80 000 g/mol or more, for instance 100 000 g/mol or more. For example, the at least one poly-C₅-C₁₅-alkenamer may have a weight-average molecular weight (M_{w}) of 300 000 g/mol or less, for instance 250 000 g/mol or less, for instance 200 000 g/mol or less, or 180 000 g/mol or less, or 150 000 g/mol or less. The weight-average molecular weight (M_{w}) of the at least one poly-C₅-C₁₅-alkenamer may be in a range formed by any desired combination of abovementioned values, for example of 10 000 g/mol to 250 000 g/mol, preferably in the range of 80 000 to 180 000 g/mol. The weight-average molecular weight (M_{w}) of the poly-C₅-C₁₅-alkenamer may be determined by way of gel permeation chromatography (GPC) using polystyrene standards. The weight-average molecular weight of the poly-C₅-C₁₅-alkenamer may be determined here by GPC by means of DIN 55672-1.

As already mentioned above, the at least one poly-C₅-C₁₅-alkenamer may be present in the form of open-chain molecules, in the form of cyclic molecules or as a mixture of open-chain and cyclic molecules. There is typically a mixture of open-chain and cyclic molecules. For example, the proportion by weight of cyclic molecules here may be 20% by weight or more, for instance 20% to 40% by weight, based on the total weight of the poly-C₅-C₁₅-alkenamer.

The at least one poly-C₅-C₁₅-alkenamer may be present as a solid under standard conditions (20°C, 101.3 kPa). The at least one poly-C₅-C₁₅-alkenamer may be characterized by its melting point. For example, the at least one poly-C₅-C₁₅-alkenamer may thus have a melting point of 30°C or more, or of 40°C or more, or of 50°C or more under standard conditions. The at least one poly-C₅-C₁₅-alkenamer may for instance have a melting point of 100°C or less, for instance of 90°C or less, or of 80°C or less, or of 70°C or less under standard conditions. The melting point may be in a range formed by any desired combination of abovementioned values, for example in the range of 30°C to 100°C, for instance in the range of 40°C to 70°C. The melting point of the poly-C₅-C₁₅-alkenamer may be determined by means of differential scanning calorimetry in accordance with DIN EN ISO 11357-3, the melting point usually being regarded as the measurement result after the second heating run, and a heating-cooling rate of 20°C/min being used. The at least one poly-C₅-C₁₅-alkenamer can therefore easily be melted, for example before or during a mixing operation for the production of the composition, this promoting the dispersion, wetting, swelling, and activation of the elastomer-containing powders or pelletized materials.

As an alternative or in addition, the at least one poly-C₅-C₁₅-alkenamer may be characterized by its crystalline fraction. For example, the at least one poly-C₅-C₁₅-alkenamer may thus have a crystalline fraction of 20% or more, for instance 25% or more, or 30% or more under standard conditions (20°C, 101.3 kPa). The at least one poly-C₅-C₁₅-alkenamer may for example have a crystalline fraction of 60% or less, for instance 50% or less, for instance 40% or less, for instance 35% or less. The crystalline fraction may be in a range formed by any desired combination of abovementioned values, for example in the range of 20% to 50%, or of 25% to 35%. The crystalline fraction of the poly-C₅-C₁₅-alkenamer may be determined by means of differential scanning calorimetry in accordance with DIN EN ISO 11357-7. It is also possible to determine the crystalline fraction of the poly-C₅-C₁₅-alkenamer by means of X-ray diffraction methods, such as described in Wenig, W., H. -W. Fiedel, and J. Petermann. "The Microstructure of Trans-Polyoctenamer". Colloid & Polymer Science 266, No. 3 (March 1988): 227-34.

According to the invention, use may be made of one poly-C₅-C₁₅-alkenamer or a mixture or combination of two or more poly-C₅-C₁₅-alkenamers, such as the poly-C₅-C₁₅-alkenamers described above. Preferably, the at least one poly-C₅-C₁₅-alkenamer used according to the invention comprises or consists of a polyoctenamer. In particular, the polyoctenamer may be a 1,8-polyoctenamer. The polyoctenamer may have a trans/cis double bond ratio of at least 60:40, preferably 70:30 or more, for instance in the range of 75:25 to 90:10. The trans/cis double bond ratio may be determined by means of infrared spectroscopy (FT-IR), such as described in Schneider, Wolfgang A, and Michael F Müller. "Crystallinity and thermal behaviour of trans-poly(1-octenylene)". Macromolecular Chemistry and Physics 189, No. 12 (1988): 2823-2837. Polyoctenamers having predominately trans double bonds are also referred to as trans-polyoctenamers. Polyoctenamers are commercially available under the Vestenamer^{®} trade name from Evonik.

The crosslinkable composition comprises the at least one poly-C₅-C₁₅-alkenamer usually in an amount of 1 part by weight or more, based on 100 parts by weight of the elastomer-containing powder or pelletized material. The crosslinkable composition may comprise the at least one poly-C₅-C₁₅-alkenamer for example in an amount of 2 parts by weight or more, preferably of more than 3 parts by weight, more preferably of 4 parts by weight or more, or 5 parts by weight or more, even more preferably of 6 parts by weight or more, 7 parts by weight or more, or 8 parts by weight or more, or 10 parts by weight or more, based on 100 parts by weight of the elastomer-containing powder or pelletized material. The crosslinkable composition may comprise the at least one poly-C₅-C₁₅-alkenamer for example in an amount of 30 parts by weight or less, preferably of 20 parts by weight or less, more preferably of 18 parts by weight or less, even more preferably of 15 parts by weight or less, based on 100 parts by weight of the elastomer-containing powder or pelletized material. The amount of poly-C₅-C₁₅-alkenamer may be in a range formed by any desired combination of abovementioned values, for example in a range of 4 to 20 parts by weight, preferably of 5 to 15 parts by weight, based on 100 parts by weight of the elastomer-containing powder or pelletized material. With use of amounts of more than 3 parts by weight of poly-C₅-C₁₅-alkenamer, particularly in a range of approximately 5 to approximately 15 parts by weight, based on 100 parts by weight of the elastomer-containing powder or pelletized material, it was found that the crosslinkable compositions can result in elastomer compounds having particularly high rebound.

The crosslinkable composition according to the present invention further comprises a polybutadiene component. The composition therefore comprises at least one polybutadiene in addition to the elastomer-containing powder or pelletized material and the at least one poly-C₅-C₁₅-alkenamer. In the sense of the present disclosure, "polybutadiene" should be understood here to mean homopolymers obtainable by polymerization of 1,3-butadiene, as well as copolymers obtainable by copolymerization of 1,3-butadiene with one or more other ethylenically unsaturated monomers. Examples of copolymerizable ethylenically unsaturated monomers include, for instance, alkynes, alkenes, ethylenically unsaturated aromatic compounds such as vinylaromatics (for example styrene), ethylenically unsaturated carboxylic acids or anhydrides, and ethylenically unsaturated monomers with other functional groups, such as hydroxyl, halogen, nitrile, amino or sulfur-containing groups. As desired, the at least one polybutadiene may thus comprise structural units derived from at least one additional ethylenically unsaturated monomer different from butadiene. If used, the optional at least one additional monomer different from butadiene may preferably comprise an ethylenically unsaturated carboxylic acid or an anhydride thereof, such as acrylic acid, methacrylic acid, maleic acid or maleic anhydride. The proportion of structural units derived from 1,3-butadiene here is generally at least 60% by weight, for instance 70% by weight or more, or 80% by weight or more, or 85% by weight or more, or 90% by weight or more, based on the total weight of the polybutadiene. The proportion of structural units derived from 1,3-butadiene may be up to 100% by weight, for instance 99% by weight or less, or 95% by weight or less, based on the total weight of the polybutadiene. The proportion of structural units derived from 1,3-butadiene may be in a range formed by any desired combination of abovementioned values, for example in a range of 60% to 100% by weight, or of 80% to 95% by weight. Preferably, the polybutadiene component comprises or consists of a homopolymer obtainable by polymerization of 1,3-butadiene.

Polybutadienes can be produced in a known manner from 1,3-butadiene, as desired in combination with one or more additional ethylenically unsaturated monomers, such as those mentioned above, by means of anionic, coordination or radical polymerization. The polybutadiene molecules formed are ethylenically unsaturated; they comprise C=C double bonds. The C=C double bonds in the structural units derived from 1,3-butadiene may here be present in 1,4*-cis* configuration or 1,4*-trans* configuration in the main polymer chain or in 1,2 configuration, i.e. as vinyl group bonded to the side of the main chain. The proportions with which the various double bond configurations are present in the polymer depend on the type of polymerization method used and on the polymerization conditions, and can thus vary. Radical polymerization thus often results in a rather balanced ratio of the various double bond configurations, the proportion of vinyl side groups tending to decrease at low reaction temperatures. Anionic polymerization tends to promote 1,4-*trans* units. In contrast, coordination polymerization using Ziegler-Natta catalysts often results in a polymer having a high proportion of 1,4*-cis* units. The at least one polybutadiene used in the composition according to the invention may therefore have a certain stereospecific structure. The polybutadiene may thus predominately have double bonds in one of the abovementioned configurations. For example, the polybutadiene component may comprise a polybutadiene which has 50% or more of 1,2-vinyl double bonds, based on the total amount of double bonds in the polybutadiene. As an alternative or in addition, the polybutadiene component may comprise a polybutadiene which has 50% or more of 1,4-trans double bonds, based on the total amount of double bonds in the polybutadiene. As an alternative or in addition, the polybutadiene component may comprise a polybutadiene which has 50% or more of 1,4-cis double bonds, based on the total amount of double bonds in the polybutadiene. The proportion of double bonds in the various configurations may be determined by means of infrared spectroscopy as described above in relation to the trans/cis double bond ratio in the case of poly-C₅-C₁₅-alkenamers. Alternatively, determination by way of NMR spectroscopy is also possible.

The polybutadiene component therefore also introduces C=C double bonds, that can be crosslinked, into the composition. The content of C=C double bonds in the polybutadiene component may be described by the iodine number, as a measure of the degree of the unsaturated character of the polymer. The iodine number may be determined in accordance with DIN 53241-1. The polybutadiene used in the context of the present invention may for example have an iodine number of 100 g of iodine/100 g or more, for instance of 200 g of iodine/100 g or more, or of 300 g of iodine/100 g or more, or of 400 g of iodine/100 g or more. For example, the polybutadiene may have an iodine number of 1000 g of iodine/100 g or less, for instance of 800 g of iodine/100 g or less, or of 700 g of iodine/100 g or less, or of 600 g of iodine/100 g or less, or of 500 g of iodine/100 g or less. The iodine number of the at least one polybutadiene may be in a range formed by any desired combination of abovementioned values, for example in a range of 100 to 1000 g of iodine/100 g, for instance in the range of 300 to 600 g of iodine/100 g.

The at least one polybutadiene may optionally have one or more terminal functional groups. Alternatively, the at least one polybutadiene has no terminal functional groups. Examples of terminal functional groups are, for instance, oxygen-containing groups, such as hydroxyl groups, (poly)ether groups, ester groups, or epoxy groups, nitrogen-containing functional groups, such as amino groups, ammonium groups or nitrile groups, phosphorus-containing groups, such as groups derived from an oxo-acid of phosphorus, sulfur-containing groups, such as thiol groups or (poly)thioether groups, or silicon-containing groups, such as silane groups. Preferably, use may be made in the context of the present invention of a polybutadiene having terminal functional groups selected from hydroxyl groups and silane groups, for instance alkoxysilane groups, for example trialkoxysilane groups. For instance, the result when using such functionalized polybutadienes may be particularly high rebound for elastomer compounds formed from the crosslinkable composition.

The production of hydroxy-terminated and silane-terminated polybutadienes is described in WO 2016/180 649 A1, for example.

The at least one polybutadiene used in the crosslinkable composition of the present invention is a liquid polybutadiene. This means that the polybutadiene is in liquid form under standard conditions (20°C, 101.3 kPa). It can therefore be combined effectively with the other components of the composition, with the good chemical compatibility of the polybutadiene both with the poly-C₅-C₁₅-alkenamer component and with the elastomer component being beneficial. The liquid polybutadiene component can disperse the elastomer-containing powder or pelletized material, diffuse into it, and fill intraparticle hollow spaces as well as interparticle spaces, and together with the poly-C₅-C₁₅-alkenamer component contribute to strong material cohesion in the case of crosslinking.

The at least one liquid polybutadiene typically has a relatively low molecular weight. For instance, the at least one polybutadiene may have a weight-average molecular weight (M_{w}) of 10 000 g/mol or less, for instance 8000 g/mol or less, or 6000 g/mol or less, preferably of 5000 g/mol or less, or 4000 g/mol or less. For example, the at least one polybutadiene may have a weight-average molecular weight (M_{w}) of 1000 g/mol or more, for instance 1500 g/mol or more, or 2000 g/mol or more, or 2500 g/mol or more. The weight-average molecular weight (M_{w}) of the at least one polybutadiene may be in a range formed by any desired combination of abovementioned values, for example of 1000 g/mol to 10 000 g/mol, or of 1500 g/mol to 6000 g/mol. A polybutadiene having a weight-average molecular weight (M_{w}) in the range of 2000 to 5000 g/mol is preferably used. The weight-average molecular weight (M_{w}) of the polybutadiene may be determined by way of gel permeation chromatography using polystyrene standards.

Liquid polybutadienes, as described above, are commercially available under the Polyvest^{®} trade name from Evonik.

The crosslinkable composition comprises the at least one polybutadiene usually in an amount of 1 part by weight or more, based on 100 parts by weight of the elastomer-containing powder or pelletized material. The crosslinkable composition may comprise the at least one polybutadiene for example in an amount of 2 parts by weight or more, or 3 parts by weight or more, or 5 parts by weight or more, or 6 parts by weight or more, or 8 parts by weight or more, or 10 parts by weight or more, or 12 parts by weight or more, or 15 parts by weight or more, based on 100 parts by weight of the elastomer-containing powder or pelletized material. The crosslinkable composition may comprise the at least one polybutadiene for example in an amount of 30 parts by weight or less, or 25 parts by weight or less, or 20 parts by weight or less, or 18 parts by weight or less, based on 100 parts by weight of the elastomer-containing powder or pelletized material. The amount of the at least one polybutadiene may be in a range formed by any desired combination of abovementioned values, for example in a range of 1 to 30 parts by weight, or of 5 to 25 parts by weight, or of 8 to 15 parts by weight, based on 100 parts by weight of the elastomer-containing powder or pelletized material. Increasing the amount used of the liquid polybutadiene can increase the rebound of the elastomer compounds obtainable from the crosslinkable composition by crosslinking.

On the other hand, when the amount of added additives such as poly-C₅-C₁₅-alkenamer and polybutadiene is increased, the relative proportion of the elastomer-containing powder or pelletized material falls, as a result of which the material costs increase and the proportion of recycled materials in the total composition can fall. The crosslinkable composition therefore comprises the at least one poly-C₅-C₁₅-alkenamer and the at least one polybutadiene typically in a total amount of 40 parts by weight or less, preferably 35 parts by weight or less, or 30 parts by weight or less, or 25 parts by weight or less, based on 100 parts by weight of the elastomer-containing powder or pelletized material. For example, the crosslinkable composition may comprise the at least one poly-C₅-C₁₅-alkenamer and the at least one polybutadiene in a total amount of 5 parts by weight or more, for instance 10 parts by weight or more, for instance 15 parts by weight or more, based on 100 parts by weight of the elastomer-containing powder or pelletized material. The total amount of the at least one poly-C₅-C₁₅-alkenamer and the at least one polybutadiene may be in a range formed by any desired combination of abovementioned values, for example of 5 to 40 parts by weight, or of 10 to 35 parts by weight, or of 15 to 30 parts by weight, based on 100 parts by weight of the elastomer-containing powder or pelletized material.

The quantity ratio of the at least one poly-C₅-C₁₅-alkenamer to the at least one polybutadiene in the composition may be varied within a wide range. Usually, the weight ratio of poly-C₅-C₁₅-alkenamer to polybutadiene is in the range of 1:5 to 5:1, preferably in the range of 1:4 to 4:1 or of 1:3 to 3:1 or of 1:2 to 2:1.

In addition to the elastomer-containing powder or pelletized material, the poly-C₅-C₁₅-alkenamer component and the polybutadiene component, the composition also comprises at least one crosslinking agent. Useful crosslinking agents are all substances by way of which the composition can be crosslinked to form a three-dimensional network. This crosslinking may in particular be effected by way of chemical reaction with involvement of C=C double bonds, as a result of which covalent bonds can be formed between originally separate polymer molecules, and a three-dimensional network is thus formed. On account of the C=C double bonds contained, the poly-C₅-C₁₅-alkenamer and the polybutadiene component, as well as the elastomer-containing powder or pelletized material activated by these, can be crosslinked with one another. Crosslinking agents used may therefore be any crosslinking agents known from the prior art that are suitable for the crosslinking of ethylenically unsaturated polymers. Known customary crosslinking systems, such as those described, for instance, in F. Röthemeyer, F. Sommer, Kautschuk Technologie, 3rd ed., Hanser Verlag, 2013, are based, for instance, on sulfur or sulfur-containing compounds, or on peroxides, and may be used in the compositions described herein. Therefore, the at least one crosslinking agent may for example comprise one or more peroxides. Peroxidic crosslinking agents used here may in particular be organic peroxides. Examples of suitable organic peroxides include, for instance, dicumyl peroxide, di(2,4-dichlorobenzoyl) peroxide, tert-butyl peroxybenzoate, 1,1-di(tert-butylperoxy)-3,3,5-trimethylcyclohexane, butyl 4,4-di(tert-butylperoxy)valerate, di(2-tert-butylperoxyisopropyl)benzene, tert-butyl cumyl peroxide, 2,5-dimethyl-2,5-di(tert-butylperoxy)hexane, di-tert-butyl peroxide, 2,5-dimethyl-2,5-di(tert-butylperoxy)hex-3-yne, or mixtures and combinations thereof. Such peroxidic crosslinking agents are commercially available, for instance, under the Peroxan^{®} trade name from Pergan. As an alternative or in addition, the at least one crosslinking agent may comprise sulfur and/or sulfur donors. Elemental sulfur may thus preferably be used as crosslinking agent in the composition according to the invention. Elemental sulfur may be used in soluble form or insoluble form, preferably in soluble form. Soluble sulfur here means the form of yellow sulfur which is stable at normal temperatures (cyclooctasulfur, S₈, also referred to as α-sulfur), which is highly soluble in CS₂. In contrast, insoluble sulfur is understood to mean sulfur modifications which are sparingly soluble in CS₂. In addition or as an alternative to the sulfur, it is possible to use one or more sulfur donors as crosslinking agent. Examples of sulfur donors are, for instance, dithioalkanes, dicaprolactam sulfides, polymeric polysulfides, sulfur-olefin adducts, or thiurams such as tetramethylthiuram disulfide, tetraethylthiuram disulfide or dipentamethylenthiuram tetrasulfide. The crosslinking agent used according to the invention preferably comprises sulfur.

The at least one crosslinking agent is generally used in an amount that is effective with regard to the crosslinking reaction. The at least one crosslinking agent in the crosslinkable composition is usually used in an amount of 0.01 parts by weight or more, for instance 0.03 parts by weight or more, or 0.05 parts by weight or more, or 0.08 parts by weight or more, or 0.1 parts by weight or more, or 0.15 parts by weight or more, per part by weight of the cumulated poly-C₅-C₁₅-alkenamer and polybutadiene components. The at least one crosslinking agent may be present in the crosslinkable composition for example in an amount of 0.5 parts by weight or less, for instance 0.4 parts by weight or less, or 0.3 parts by weight or less, or 0.25 parts by weight or less, per part by weight of the cumulated poly-C₅-C₁₅-alkenamer and polybutadiene components. The composition may comprise the at least one crosslinking agent in an amount that is in a range formed by any desired combination of abovementioned values, for example of 0.05 to 0.5 parts by weight, or of 0.03 to 0.3 parts by weight, or of 0.05 to 0.25 parts by weight, per part by weight of the cumulated poly-C₅-C₁₅-alkenamer and polybutadiene components.

As desired, the crosslinkable composition may further comprise one or more crosslinking aids. The one or more crosslinking aids may for example comprise one or more components selected from accelerators, activators, dispersants, complexing agents and retardants. Such crosslinking aids are described, for example, in F. Röthemeyer, F. Sommer, Kautschuk Technologie, 3rd ed., Hanser Verlag, 2013.

Examples of accelerators include, for instance, xanthogenates, guanidines, dicarbamates, dithiocarbamates, thiurams, thiourea compounds, benzothiazole sulfonamides, aldehyde amines, amine derivatives such as tetramines, disulfides, thiazoles, sulfenamides, sulfenimides, piperazines, and amine carbamates. Exemplary specific compounds that may be used according to the invention as accelerator are, for instance, N-tert-butyl-2-benzothiazylsulfenamide, o-tolyl biguanidine (OTBG), 1,3-di-o-tolylguanidine (DOTG), *N*-cyclohexylbenzothiazole-2-sulfenamide (CBS), benzothiazyl-2-tert-butylsulfenamide (TBBS), benzothiazyl-2-dicyclohexylsulfenamide (DCBS), 1,3-diethylthiourea (DETU), 2-mercaptobenzothiazole (MBT), benzothiazyldicyclohexylsulfenamide (DCBS), 2-mercaptobenzothiazole disulfide (MBTS), dimethyldiphenylthiuram disulfide (MPTD), ethylenethiourea (ETU), triethyltrimethyltriamine (TTT); N-t-butyl-2-benzothiazolesulfenimide (TBSI), 1,1'-dithiobis(4-methylpiperazine), hexamethylenediamine carbamate (HMDAC), tetrabenzylthiuram disulfide (TBZTD), diethylthiourea (DETU), N,N-ethylenethiourea (ETU), diphenylthiourea (DPTU), benzothiazyl-2-tert-butylsulfenamide (TOBS), N,N'-diethylthiocarbamyl-N'-cyclohexylsulfenamide (DETCS), cyclohexylethylamine, dibutylamine, polyethylenepolyamines or polyethylenepolyimines such as triethylenetetramine (TETA).

The accelerator or accelerators is/are usually used in an amount that corresponds to a weight ratio of accelerator to crosslinking agent in the range of 1:5 to 5:1, for instance in the range of 1:4 to 4:1, or of 1:3 to 3:1 or of 1:2 to 2:1.

The activator used may for example be zinc oxide. Furthermore, the composition may comprise a fatty acid or salt thereof, for example stearic acid or a stearate such as zinc stearate. Such compounds may act as dispersants and complexing agents, for example. Preferably, the crosslinkable composition comprises a crosslinking system comprising sulfur, one or more accelerators, zinc oxide and a fatty acid or a salt thereof, such as stearic acid.

Activators such as zinc oxide are usually used in an amount that corresponds to a weight ratio of activator to crosslinking agent in the range of 1:4 to 8:1, for instance in the range of 1:3 to 5:1, or of 1:2 to 4:1 or of 1:1 to 3:1.

Fatty acids or salts thereof, such as stearic acid or stearate, are usually used in an amount that corresponds to a weight ratio of fatty acid/salt to crosslinking agent in the range of 1:5 to 5:1, for instance in the range of 1:4 to 4:1, or of 1:3 to 3:1 or of 1:2 to 2:1.

As desired, the crosslinkable composition may also comprise, according to the requirement and use, one or more further components, such as those commonly used in the field of elastomer compositions, for instance fillers, pigments, dyes, plasticizers, processing aids, mould release agents, flame retardants, ageing stabilizers, UV stabilizers or ozone stabilizers, and adhesives. If used, such optional components are used in amounts suitable for achieving the respective purpose. Advantageous amounts can be determined by those skilled in the art using experiments customary in the art.

The crosslinkable compositions according to the invention can be produced in a cost-effective and efficient manner using customary techniques and equipment from the field of powder processing. It is thus possible to mix the elastomer-containing powder or pelletized material, the at least one poly-C₅-C₁₅-alkenamer, the at least one liquid polybutadiene, the at least one crosslinking agent and any further optional components, in suitable amounts, as are described above, in a mixer with homogenization to form a corresponding crosslinkable composition. For example, the mixer used may be a normal powder mixer or preferably a high-speed mixer such as a Henschel blender, Speed Mixer or fluid mixer. The mixing may for example follow the procedure described in EP 0 508 056 B1 or in Diedrich, KM, and BJ Burns "Possibilities of ground tire recycling with trans-polyoctenamer". Gummi, Fasern, Kunststoffe 53, No. 3 (2000): 178-183.

The obtainable crosslinkable compositions according to the present invention may accordingly be present as a mixture of the components used, usually in the form of a dispersion. The components contained in the composition, such as the elastomer-containing powder or pelletized material, the at least one poly-C₅-C₁₅-alkenamer, the at least one liquid polybutadiene and the at least one crosslinking agent, are generally physically mixed with one another, but are not joined by fixed chemical bonds, such as covalent bonds. The crosslinkable compositions are usually formable and/or flowable.

Elastomer compounds and shaped bodies formed therefrom can be produced from the above-described crosslinkable compositions according to the invention. "Elastomer compound" is understood herein to mean a dimensionally stable elastomer-containing material having rubber-elastic properties. Elastomer compounds may be produced by crosslinking (also referred to as vulcanization) of the crosslinkable composition described herein. To this end, an amount of the crosslinkable composition, provided for further processing, is generally heated to a temperature at which a chemical crosslinking reaction takes place in the composition. By way of the chemical crosslinking reaction, links can be formed via covalent bonds between originally separate molecules, and a three-dimensional network can thus be formed. In the present case, the crosslinking may in particular be effected by chemical reaction of C=C double bonds that are present both in the poly-C₅-C₁₅-alkenamer component and the polybutadiene component, as well as in the (activated) elastomer-containing powder or pelletized material, under the action of the crosslinking agent, for example with formation of sulfur bridges. It is thus possible to form a wide-mesh three-dimensional network which imparts rubber-elastic properties to the resulting crosslinked material. Therefore, in the elastomer compound obtainable from the crosslinkable composition, the poly-C₅-C₁₅-alkenamer, the polybutadiene and the elastomer-containing powder or pelletized material may be present crosslinked with one another. The particles of the powder or pelletized material are therefore generally incorporated firmly in the elastomer compound.

In the present case, the compositions according to the invention may in particular be crosslinked at a temperature of 100°C or more, for instance of 120°C or more, for instance 140°C or more, for instance 150°C or more, for instance 160°C or more. For example, the crosslinking may be carried out at a temperature of 250°C or less, for instance 220°C or less, for instance 200°C or less, for instance 180°C or less. For example, the crosslinkable compositions according to the invention may be crosslinked at a temperature that is in a range formed by any desired combination of abovementioned values, for example of 100°C to 250°C, or of 120°C to 220°C. The crosslinking is preferably carried out at a temperature in the range of 140°C to 200°C.

The crosslinking time is guided by the crosslinking temperature used and the dimensions of the amount used of composition to be crosslinked. The crosslinking is generally carried out in a time of 60 minutes or less, for example in a time of 30 minutes or less, or 20 minutes or less, or 15 minutes or less, or 10 minutes or less, or 5 minutes or less. For example, the crosslinking may be performed in a time of 10 seconds or more, for instance 15 seconds or more, for instance 30 seconds or more, for instance 1 minute or more, for instance 2 minutes or more, for instance 5 minutes or more. The crosslinking of the crosslinkable compositions according to the invention may be carried out for a time that is in a range formed by any desired combination of abovementioned values, for example for a time in the range of 10 seconds to 60 minutes, for instance in the range of 2 to 30 minutes. The crosslinking time is usually in the range of 1 to 20 minutes. Low crosslinking temperatures and large dimensions of composition to be crosslinked tend to require longer crosslinking times.

Shaping may be performed before, during and/or after the crosslinking of the composition to be crosslinked. It is thus possible to produce shaped bodies having a wide variety of shapes and dimensions that comprise an elastomer compound formed from the compositions according to the invention by crosslinking. The shaping is generally performed using a shaping tool. The production of a shaped body may thus comprise providing an amount of the crosslinkable composition according to the invention as feed material for a shaping tool, shaping the feed material using the shaping tool to form a desired shape, and crosslinking the feed material to form a crosslinked elastomer compound. Customary process techniques and tools, such as those known to those skilled in the art from the field of the processing of rubber compositions and described, for instance, in F. Röthemeyer, F. Sommer, Kautschuk Technologie, 3rd ed., Hanser Verlag, 2013, may be used for the crosslinking and shaping of the compositions according to the invention. For example, the shaping may be performed by way of compression moulding or extrusion.

The shaped bodies producible from the compositions according to the invention may themselves represent usable products or be used after further processing and/or as parts in products.

The compositions according to the invention may be used for the production of a multiplicity of different articles. The compositions according to the invention may thus be used for the production of any customary products from the rubber-processing industry, for example of tyres or tyre components, cable sheaths, tubes, mats, coverings, conveyor belts, drive belts, rollers, coatings, shoe soles, sealing elements, or profiles.

The elastomer compounds obtainable from the compositions according to the invention by crosslinking and shaped bodies formed therefrom have good material cohesion and good mechanical properties that are able to satisfy even relatively demanding applications. Use may be made here of high proportions, for example 70% by weight or more, based on the total weight of the composition, of recycled materials that are available inexpensively on a large scale, such as pelletized used tyres. In addition, the elastomer compounds obtainable from the compositions according to the invention by crosslinking and shaped bodies formed therefrom prove to be ageing-resistant and do not exhibit any significant changes in their properties even after being stored for relatively long periods of time, for instance several months.

The elastomer compounds obtainable from the crosslinkable compositions according to the invention and shaped bodies formed therefrom may in particular have excellent rebound. They are therefore useful particularly for applications in which good rebound is desirable or necessary, for example for certain applications in the sports and leisure sector, for instance balls, including tennis balls, squash balls, exercise balls or space hoppers, or bouncy balls or toy balls for animals. For instance, balls produced from the crosslinkable compositions according to the invention are able to meet the requirements for tennis balls defined by the International Tennis Federation (ITF). Even pressureless balls produced from the crosslinkable compositions according to the invention can thus achieve rebound heights, determined in accordance with test method ITF TB 04/01, of sometimes more than 120 cm, or even 130 cm or more. It would correspondingly be possible to achieve higher rebound heights with pressurized balls. The present invention is therefore directed, in a specific aspect, also to a ball comprising an elastomer compound formed from the crosslinkable composition according to the invention. The ball may specifically be a tennis ball. Such tennis balls may be produced in a manner known per se, except using the crosslinkable compositions according to the invention. It is thus possible to shape hemispherical shells from the crosslinkable composition according to the invention and to crosslink the composition as described above to form an elastomer compound. Two hemispherical shells in each case can then be adhesively bonded to form a hollow sphere, the ball core. When producing a pressurized ball, the interior of the ball core is filled with a pressurized (for example 1.5 to 2.5 atm) gas, such as air or nitrogen, for instance by adhesively bonding the hemispherical shells under positive pressure in a corresponding atmosphere. In contrast, in the case of pressureless balls the hemispherical shells are joined together under normal conditions, without positive pressure. The ball core can finally be provided with a felt covering in the usual manner. The dimensions and the colouring of the ball are generally guided by the specifications of the ITF.

In addition, the present invention is also directed to the use of at least one poly-C₅-C₁₅-alkenamer in combination with at least one liquid polybutadiene for processing elastomer in particulate form, particularly for the realization of high rebound and/or the production of (tennis) balls. The poly-C₅-C₁₅-alkenamer, the polybutadiene and the elastomer in particulate form may here be like the poly-C₅-C₁₅-alkenamer, polybutadiene and elastomer-containing powder or pelletized material, respectively, as described in more detail above.

The present invention is illustrated hereinafter on the basis of some specific examples. The examples are exemplary and serve for illustration. The examples should not be regarded as a restriction to the invention; rather, the invention extends to the entire breadth, including equivalents, set forth in the general description and the claims which follow.

### Examples

### Production of crosslinkable compositions (Examples 1-12)

Various crosslinkable compositions based on powder composed of used tyres (ground tyre rubber, GTR) were produced.

For this purpose, the starting materials listed in Table 1, in the reported amounts, were mixed in a Hauschild SpeedMixer DAC 400 mixer (Hauschild GmbH & Co KG, Germany) at high mixing speed (1800 rpm) in each case to form a homogeneous crosslinkable composition.

The amounts of the individual components are reported in Table 1 as parts by weight based on 100 parts by weight of the powder composed of used tyres (parts per hundred rubber component, "phr" for short).

**Table 1:**

| | Ex. 1* | Ex. 2* | Ex. 3* | Ex. 4* | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|
| Component | Amount [phr] | | | | | | | | | | | |
| GTR¹ | 100 | 100 | 100 | 100 | 100 | 100 | 100 | 100 | 100 | 100 | 100 | 100 |
| Polyalkenamer² | - | 3 | 6 | 10 | 10 | 10 | 10 | 10 | 3 | 6 | 12 | 24 |
| Oil³ | 12 | 12 | 12 | 12 | - | - | - | - | - | - | - | - |
| Polyvest^{®} EP ST-E 60⁴ | - | - | - | - | 3 | 6 | 12 | 24 | 12 | 12 | 12 | 12 |
| Sulfurs | 0.8 | 0.8 | 1.6 | 2.67 | 2.67 | 2.67 | 2.67 | 2.67 | 0.8 | 1.6 | 3.2 | 6.4 |
| Zinc oxide⁶ | 1.5 | 1.5 | 3 | 5 | 5 | 5 | 5 | 5 | 1.5 | 3 | 6 | 12 |
| Stearic acid⁷ | 0.5 | 0.5 | 1 | 1.67 | 1.67 | 1.67 | 1.67 | 1.67 | 0.5 | 1 | 2 | 4 |
| CBS⁸ | 0.8 | 0.8 | 1.6 | 2.67 | 2.67 | 2.67 | 2.67 | 2.67 | 0.8 | 1.6 | 3.2 | 6.4 |
| TBzTD⁹ | 0.2 | 0.2 | 0.4 | 0.67 | 0.67 | 0.67 | 0.67 | 0.67 | 0.2 | 0.4 | 0.8 | 1.6 |
| Material cohesion | poor | good | good | good | good | good | good | good | good | good | good | good |
| Rebound height [cm] | 93 | 92 | 92 | < 92 | 120 | 123 | 131 | 128 | 113 | 123 | 126 | 108 |

| | | | | | | | | | | | | |
|---|---|---|---|---|---|---|---|---|---|---|---|---|
| *: Comparative example 1: Powder composed of used truck tyres (ground tyre rubber, GTR), particle size <425 µm 2: Polyoctenamer, commercially available from Evonik under the Vestenamer^{®} trade name 3: Vivatec 500, commercially available from Hansen & Rosenthal 4: liquid polybutadiene, commercially available from Evonik 5: Ground sulfur, commercially available from Avokal 6: Zinc oxide, ultrapure, commercially available from Dr. Wieland GmbH & Co. KG 7: commercially available from Calcic 8: *N*-Cyclohexylbenzothiazole-2-sulfenamide, vulcanization accelerator, commercially available from Lanxess 9: Tetrabenzylthiuram disulfide, vulcanization accelerator, commercially available from Richon | | | | | | | | | | | | |

### Production of shaped bodies

Shaped bodies were produced from the produced crosslinkable compositions by compression moulding with vulcanization of the respective crosslinkable composition to form an elastomer compound. For this purpose, use was made of a two-part press mould made of steel and consisting of a lower cylindrical body, having centrally on its upper side a hemispherical depression as material receptacle, and of an upper pressure plate, having centrally on its lower side a hemispherical projection with a smaller diameter than the hemispherical depression and being able to be applied onto the lower cylindrical body in a centred manner via guides such that the hemispherical projection of the pressure plate engages into the hemispherical depression of the lower cylindrical body in a centred manner.

The respective crosslinkable composition was placed here into the hemispherical material receptacle of the lower cylindrical body of the press mould, with the amount used corresponding to a material excess of about 10% based on the shaped body to be pressed. Subsequently, the upper pressure plate was applied onto the lower cylindrical body of the press mould in a centred manner via the guides and the filled press mould assembled in this way was introduced into a press (Lauffer RLKV 25/1), by means of which the upper pressure plate of the press mould is pressed onto the upper side of the lower cylindrical body until it is flush. The hemispherical projection of the pressure plate engages in this case into the hemispherical depression of the lower cylindrical body in a centred manner and as a result compresses the material located between the two. The filled press mould introduced into the press was then heated to a temperature of 165°C by means of the heatable plates of the press and kept at this temperature for 18 minutes in order to vulcanize the crosslinkable composition. After cooling, the pressure plate was moved away from the cylindrical body of the press mould and the consolidated compact obtained by the pressing and vulcanizing operation that has a shape corresponding to half of a hollow sphere was removed and freed of any adhesions. The observed material cohesion of the compacts obtained from the various compositions examined is listed qualitatively in Table 1.

Two corresponding shaped bodies produced in this way from the same crosslinkable composition were subsequently joined together by means of an adhesive (cold-vulcanizing adhesive Rema TipTop SC BL) in each case to form a hollow spherical ball. The adhesive was applied in this case to the two surfaces to be adhesively bonded, then after 15 minutes of drying the two shaped bodies were pressed together over the surfaces provided with adhesive and the adhesive was subsequently cured for 24 h.

The hollow spherical balls produced in the manner described had, defined by the dimensions of the press mould, an outer diameter of 61.5 mm and a wall thickness of 3.8 mm. Such dimensions are in a range of dimensions customary for ball cores of tennis balls.

### Examination of the balls produced

The balls produced from the different crosslinkable compositions as described above were examined with regard to their properties. As a property that is crucial for the use for example in tennis balls, the rebound height was determined here as a measure for the rebound of the balls.

The rebound height was determined in accordance with the test method ITF TB 04/01, described by the International Tennis Federation (ITF) in "ITF Approved Tennis Balls, classified surfaces & recognised courts 2021 - a guide to products and test methods", as follows:
The ball to be tested is dropped from a height of 254 cm (measured from the bottom of the ball) onto a concrete slab weighing 10 kg that is vertically below it and that has a horizontally aligned level smooth surface. The concrete slab is placed in front of a wall provided with a height scale. A projector mounted on the opposite wall of the room at the expected rebound height illuminates the wall. The rebound height is determined using the shadow cast horizontally onto the scaled wall by the ball rebounding from the concrete slab. For this purpose, the shadow of the ball is recorded using a digital video camera pointed at the scaled wall and is then evaluated on a computer. By analysing the video recording, the rebound height is determined, using the height scale, as the maximum height (in centimetres) that the shadow of the rebounding ball (measured from the bottom of the shadow) reaches on the scaled wall.

The determined rebound heights are reported in Table 1 for the various compositions tested.

As can be seen from Table 1, a composition that comprised a process oil in addition to the powder composed of used tyres and a crosslinking system resulted in comparatively low rebound (cf. Comparative Example 1, rebound height: 93 cm), which for instance would be insufficient for applications in tennis balls. In addition, the compacts produced from such a composition by the pressing and vulcanizing operation only had low material cohesion. When a polyalkenamer is added to the composition, the material cohesion of the compacts produced is significantly improved. However, as shown by Comparative Examples 2-4 in Table 1, the rebound is not significantly influenced by the addition of polyalkenamer alone, even in the case of relatively great amounts, and rather tends to decline. In contrast, Examples 5 to 12 show that compositions according to the invention which comprise a liquid polybutadiene in addition to the polyalkenamer can not only be processed to form shaped bodies having good material cohesion, but surprisingly lead to a distinct improvement in the rebound. In the tests carried out, it was possible to achieve excellent rebound heights of 120 cm or more, sometimes of more than 130 cm, even with the produced pressureless balls, these rebound heights indicating a suitability for tennis balls, for instance. The achievable rebound height increases here with the amount used of liquid polybutadiene and can be adjusted by way of this (cf. Examples 5-8). In addition, Examples 7 and 9-12 show that the observed improvement in the rebound also depends on the amount used of polyalkenamer and is pronounced particularly in the case of amounts used of polyalkenamer in a range of more than 3 phr and less than 24 phr, with the highest achieved rebound heights at an amount of polyalkenamer of around 10 phr.

### Examples 13 & 14: Variation of the polybutadiene component

Further crosslinkable compositions based on powder composed of used tyres were produced, with various liquid polybutadienes being used in order to examine the influence of this component.

The further crosslinkable compositions according to Examples 13 and 14 were produced as described above for Examples 1-12, with the starting materials and amounts listed in Table 2 being used.

Vulcanized shaped bodies and balls formed therefrom were produced as described above in connection with Examples 1-12 from the produced compositions according to Examples 13 and 14, and the balls were examined with regard to their rebound. The determined rebound heights are displayed in Table 2. The data for Example 7 above are also shown in Table 2 for comparison purposes.

**Table 2:**

| | Ex. 7 | Ex. 13 | Ex. 14 |
|---|---|---|---|
| Component | Amount [phr] | | |
| GTR¹ | 100 | 100 | 100 |
| Polyalkenamer² | 10 | 10 | 10 |
| Polyvest^{®} EP ST-E 60⁴ | 12 | - | - |
| Polyvest^{®} EP MV¹⁰ | - | 12 | - |
| Polyvest^{®} 110¹¹ | - | - | 12 |
| Sulfurs | 2.67 | 2.67 | 2.67 |
| Zinc oxide⁶ | 5 | 5 | 5 |
| Stearic acid⁷ | 1.67 | 1.67 | 1.67 |
| CBS⁸ | 2.67 | 2.67 | 2.67 |
| TBzTD⁹ | 0.67 | 0.67 | 0.67 |
| Material cohesion | good | good | good |
| Rebound height [cm] | 131 | 119 | 120 |

| | | | |
|---|---|---|---|
| 4: liquid polybutadiene, triethoxysilane-terminated, commercially available from Evonik, >50% 1,4-trans double bonds 10: liquid polybutadiene, commercially available from Evonik, >50% 1,2-vinyl double bonds 11: liquid polybutadiene, commercially available from Evonik, >50% 1,4-cis double bonds | | | |

As can be seen from Table 2, rebound that is significantly improved compared with Comparative Examples 1-4 is determined for all polybutadienes examined. Polyvest^{®} EP ST-E 60 proved to be particularly advantageous in this case.

### Examples 15 & 16: Variation of the amount of crosslinking agent/additives

Crosslinkable compositions based on powder composed of used tyres were produced, with the amount of crosslinking agent and additives used increasing proportionally with the increase in the amount of polyalkenamer or else being kept constant.

The further crosslinkable compositions according to Examples 15 and 16 were produced as described above for Examples 1-12, with the starting materials and amounts listed in Table 3 being used.

Vulcanized shaped bodies and balls formed therefrom were produced as described above in connection with Examples 1-12 from the produced compositions according to Examples 15 and 16, and the balls were examined with regard to their rebound. The determined rebound heights are displayed in Table 3. The data for Examples 7, 9 and 10 above are also shown in Table 3 for comparison purposes.

**Table 3:**

| | Ex. 9 | Ex. 15 | Ex. 10 | Ex. 16 | Ex. 7 |
|---|---|---|---|---|---|
| Component | Amount [phr] | | | | |
| GTR¹ | 100 | 97 | 100 | 93 | 100 |
| Polyalkenamer² | 3 | 6 | 6 | 10 | 10 |
| Polyvest^{®} EP ST-E 60⁴ | 12 | 12 | 12 | 12 | 12 |
| Sulfurs | 0.8 | 0.8 | 1.6 | 0.8 | 2.67 |
| Zinc oxide⁶ | 1.5 | 1.5 | 3 | 1.5 | 5 |
| Stearic acid⁷ | 0.5 | 0.5 | 1 | 0.5 | 1.67 |
| CBS⁸ | 0.8 | 0.8 | 1.6 | 0.8 | 2.67 |
| TBzTD⁹ | 0.2 | 0.2 | 0.4 | 0.2 | 0.67 |
| Material cohesion | good | good | good | good | good |
| Rebound height [cm] | 113 | 116 | 123 | 118 | 131 |

As can be seen from Table 3, rebound that is significantly improved compared with Comparative Examples 1-4 is consistently achieved according to the examples shown. Scaling the amount of crosslinking agent and additives with the amount used of polyalkenamer proved to be particularly advantageous here.

The same balls as per Inventive Examples 5-16 were examined again after being stored for a period of 2 months. No obvious change in the balls was apparent. The material cohesion proved to still be good. The determined rebound heights corresponded to the respective values reported above with maximum deviations of <5%.

## Claims

1. A crosslinkable composition comprising:
(a) 50% by weight or more, based on the total weight of the crosslinkable composition, of a powder or pelletized material comprising at least one elastomer,
(b) 1 part by weight or more, based on 100 parts by weight of the elastomer-containing powder or pelletized material, of at least one poly-C₅-C₁₅-alkenamer,
(c) 1 part by weight or more, based on 100 parts by weight of the elastomer-containing powder or pelletized material, of at least one liquid polybutadiene, and
(d) 0.01 parts by weight or more, per part by weight of the cumulated poly-C₅-C₁₅-alkenamer and polybutadiene components of at least one crosslinking agent.

2. The crosslinkable composition according to Claim 1, wherein the powder or pelletized material comprises at least one recycled elastomer, wherein the powder or pelletized material is preferably provided by a method for recycling used tyres, preferably truck tyres, or parts thereof, preferably tyre treads.

3. The crosslinkable composition according to either one of Claims 1 and 2, wherein the powder or pelletized material comprises crosslinked natural rubber in an amount of at least 25% by weight or more, for example 25% by weight to 70% by weight, based on the total weight of the powder or pelletized material.

4. The crosslinkable composition according to any one of Claims 1 to 3, wherein the at least one poly-C₅-C₁₅-alkenamer comprises a polyoctenamer, preferably a polyoctenamer with a trans/cis double bond ratio of at least 60:40, preferably 70:30 or more, for instance in the range of 75:25 to 90:10.

5. The crosslinkable composition according to any one of Claims 1 to 4, wherein the at least one poly-C₅-C₁₅-alkenamer has a weight-average molecular weight (M_{w}), determined by way of gel permeation chromatography using polystyrene standards, in the range of 10 000 to 250 000 g/mol, preferably in the range of 80 000 to 180 000 g/mol, and/or the at least one poly-C₅-C₁₅-alkenamer, under standard conditions (20°C, 101.3 kPa), has a crystalline fraction of at least 20%, for instance of 25% to 35%, and/or the at least one poly-C₅-C₁₅-alkenamer, under standard conditions, has a melting point in the range of 30°C to 100°C, for instance in the range of 40°C to 70°C.

6. The crosslinkable composition according to any one of Claims 1 to 5, wherein the composition comprises the at least one poly-C₅-C₁₅-alkenamer (b) and the at least one polybutadiene (c) in a total amount of 5 or more parts by weight, based on 100 parts by weight of the powder or pelletized material (a), and/or wherein the weight ratio of poly-C₅-C₁₅-alkenamer (b) to polybutadiene (c) is in the range of 1:5 to 5:1, and/or the at least one poly-C₅-C₁₅-alkenamer is used in an amount of more than 3 parts by weight, based on 100 parts by weight of the powder or pelletized material (a).

7. The crosslinkable composition according to any one of Claims 1 to 6, wherein the at least one polybutadiene (c) has a weight-average molecular weight (M_{w}), determined by way of gel permeation chromatography using polystyrene standards, of 10 000 g/mol or less, preferably of 5000 g/mol or less, for instance in the range of 1000 to 5000 g/mol, and/or wherein the at least one polybutadiene (c) has an iodine number, determined in accordance with DIN 53241-1, in the range of 100 to 1000 g of iodine/100 g, for instance in the range of 300 to 600 g of iodine/100 g.

8. The crosslinkable composition according to any one of Claims 1 to 7, wherein the at least one polybutadiene (c) has terminal functional groups, wherein the terminal functional groups are preferably selected from hydroxyl groups and silane groups, for instance alkoxysilane groups.

9. The crosslinkable composition according to any one of Claims 1 to 8, wherein the at least one crosslinking agent comprises sulfur or a peroxide, preferably sulfur, and/or the crosslinkable composition as desired further comprises one or more crosslinking aids, wherein the one or more crosslinking aids preferably comprise one or more components selected from accelerators, activators, dispersants, complexing agents and retardants.

10. An elastomer compound obtainable by crosslinking the crosslinkable composition according to any one of the preceding Claims 1 to 9.

11. An article comprising an elastomer compound according to Claim 10.

12. The article according to Claim 11, wherein the article is a ball, preferably a tennis ball.

13. A method for producing an elastomer compound or article comprising the same, the method comprising:
providing a crosslinkable composition according to any of Claims 1 to 9, and crosslinking the crosslinkable composition.

14. The method according to Claim 13, wherein the crosslinking is carried out at a temperature in the range of 140°C to 200°C and/or for a time of 60 minutes or less, and/or wherein the method further comprises shaping of the crosslinkable composition to form the article before, during and/or after the crosslinking.

15. Use of at least one poly-C₅-C₁₅-alkenamer in combination with at least one liquid polybutadiene for processing elastomer in particulate form.

## Patentansprüche

1. Vernetzbare Zusammensetzung umfassend:
(a) 50 Gew.-% oder mehr, bezogen auf das Gesamtgewicht der vernetzbaren Zusammensetzung, eines Pulvers oder pelletierten Materials, das mindestens ein Elastomer umfasst,
(b) 1 Gewichtsteil oder mehr, bezogen auf 100 Gewichtsteile des elastomerhaltigen Pulvers oder pelletierten Materials, von mindestens einem Poly-C₅-C₁₅-alkenamer,
(c) 1 Gewichtsteil oder mehr, bezogen auf 100 Gewichtsteile des elastomerhaltigen Pulvers oder pelletierten Materials, von mindestens einem flüssigen Polybutadien, und
(d) 0,01 Gewichtsteile oder mehr, pro Gewichtsteil der kumulierten Poly-C₅-C₁₅-alkenamer- und Polybutadienkomponenten, von mindestens einem Vernetzer.

2. Vernetzbare Zusammensetzung nach Anspruch 1, wobei das Pulver oder pelletierte Material mindestens ein recyceltes Elastomer umfasst, wobei das Pulver oder pelletierte Material vorzugsweise durch ein Verfahren zum Recycling von gebrauchten Reifen, vorzugsweise Lkw-Reifen, oder Teilen davon, vorzugsweise Reifenlaufflächen, bereitgestellt wird.

3. Vernetzbare Zusammensetzung nach einem der Ansprüche 1 oder 2, wobei das Pulver oder pelletierte Material vernetzten Naturkautschuk in einer Menge von mindestens 25 Gew.-% oder mehr, beispielsweise 25 Gew.-% bis 70 Gew.-%, bezogen auf das Gesamtgewicht des Pulvers oder pelletierten Materials, enthält.

4. Vernetzbare Zusammensetzung nach einem der Ansprüche 1 bis 3, wobei das mindestens eine Poly-C₅-C₁₅-alkenamer ein Polyoctenamer umfasst, vorzugsweise ein Polyoctenamer mit einem trans/cis-Doppelbindungsverhältnis von mindestens 60:40, vorzugsweise 70:30 oder mehr, beispielsweise im Bereich von 75:25 bis 90:10.

5. Vernetzbare Zusammensetzung nach einem der Ansprüche 1 bis 4, wobei das mindestens eine Poly-C₅-C₁₅-alkenamer ein durchschnittliches Molekulargewicht (Gewichtsmittel) (M_{w}), bestimmt mittels Gelpermeationschromatographie unter Verwendung von Polystyrolstandards, im Bereich von 10 000 bis 250 000 g/mol, vorzugsweise im Bereich von 80 000 bis 180 000 g/mol aufweist, und/oder das mindestens eine Poly-C₅-C₁₅-alkenamer unter Standardbedingungen (20 °C, 101,3 kPa) eine kristalline Fraktion von mindestens 20 %, beispielsweise von 25 % bis 35 % aufweist, und/oder das mindestens eine Poly-C₅-C₁₅-alkenamer unter Standardbedingungen einen Schmelzpunkt im Bereich von 30 °C bis 100 °C, beispielsweise im Bereich von 40 °C bis 70 °C aufweist.

6. Vernetzbare Zusammensetzung nach einem der Ansprüche 1 bis 5, wobei die Zusammensetzung das mindestens eine Poly-C₅-C₁₅-alkenamer (b) und das mindestens eine Polybutadien (c) in einer Gesamtmenge von 5 oder mehr Gewichtsteilen, bezogen auf 100 Gewichtsteile des Pulvers oder des pelletierten Materials (a), umfasst, und/oder wobei das Gewichtsverhältnis von Poly-C₅-C₁₅-alkenamer (b) zu Polybutadien (c) im Bereich von 1:5 bis 5:1 liegt, und/oder das mindestens eine Poly-C₅-C₁₅-alkenamer in einer Menge von mehr als 3 Gewichtsteilen, bezogen auf 100 Gewichtsteile des Pulvers oder pelletierten Materials (a), verwendet wird.

7. Vernetzbare Zusammensetzung nach einem der Ansprüche 1 bis 6, wobei das mindestens eine Polybutadien (c) ein durchschnittliches Molekulargewicht (Gewichtsmittel) (M_{w}), bestimmt mittels Gelpermeationschromatographie unter Verwendung von Polystyrolstandards, von 10 000 g/mol oder weniger, vorzugsweise von 5000 g/mol oder weniger, beispielsweise im Bereich von 1000 bis 5000 g/mol aufweist, und/oder wobei das mindestens eine Polybutadien (c) eine Iodzahl, bestimmt nach DIN 53241-1, im Bereich von 100 bis 1000 g Iod/100 g, beispielsweise im Bereich von 300 bis 600 g Iod/100 g, aufweist.

8. Vernetzbare Zusammensetzung nach einem der Ansprüche 1 bis 7, wobei das mindestens eine Polybutadien (c) endständige funktionelle Gruppen aufweist, wobei die endständigen funktionellen Gruppen vorzugsweise ausgewählt sind aus Hydroxylgruppen und Silangruppen, beispielsweise Alkoxysilangruppen.

9. Vernetzbare Zusammensetzung nach einem der Ansprüche 1 bis 8, wobei das mindestens eine Vernetzungsmittel Schwefel oder ein Peroxid, vorzugsweise Schwefel, umfasst und/oder die vernetzbare Zusammensetzung gewünschtenfalls ferner ein oder mehrere Vernetzungshilfsmittel umfasst, wobei das eine oder die mehreren Vernetzungshilfsmittel vorzugsweise eine oder mehrere Komponenten ausgewählt aus Beschleunigern, Aktivatoren, Dispergiermitteln, Komplexbildnern und Verzögerern umfassen.

10. Elastomer-Compound, erhältlich durch Vernetzung der vernetzbaren Zusammensetzung nach einem der vorhergehenden Ansprüche 1 bis 9.

11. Artikel, umfassend ein Elastomer-Compound nach Anspruch 10.

12. Artikel nach Anspruch 11, wobei der Artikel ein Ball, vorzugsweise ein Tennisball ist.

13. Verfahren zur Herstellung eines Elastomer-Compounds oder Artikels, der dieses umfasst, wobei das Verfahren umfasst:
Bereitstellen einer vernetzbaren Zusammensetzung nach einem der Ansprüche 1 bis 9 und Vernetzen der vernetzbaren Zusammensetzung.

14. Verfahren nach Anspruch 13, wobei das Vernetzen bei einer Temperatur im Bereich von 140 °C bis 200 °C und/oder für eine Zeit von 60 Minuten oder weniger durchgeführt wird, und/oder wobei das Verfahren ferner Formen der vernetzbaren Zusammensetzung zur Bildung des Artikels vor, während und/oder nach dem Vernetzen umfasst.

15. Verwendung mindestens eines Poly-C₅-C₁₅-alkenamers in Kombination mit mindestens einem flüssigen Polybutadien zur Verarbeitung von Elastomer in partikulärer Form.

## Revendications

1. Composition réticulable comprenant :
(a) 50 % en poids ou plus, par rapport au poids total de la composition réticulable, d'un matériau en poudre ou mis en pastilles comprenant au moins un élastomère,
(b) 1 partie en poids ou plus, par 100 parties en poids du matériau en poudre ou mis en pastilles contenant un élastomère, d'au moins un poly-C₅-C₁₅-alcénamère,
(c) 1 partie en poids ou plus, par rapport à 100 parties en poids du matériau en poudre ou mis en pastilles contenant un élastomère, d'au moins un polybutadiène liquide, et
(d) 0,01 partie en poids ou plus, par partie en poids des composants poly-C₅-C₁₅-alcénamère et polybutadiène cumulés d'au moins un agent de réticulation.

2. Composition réticulable selon la revendication 1, dans laquelle le matériau en poudre ou mis en pastilles comprend au moins un élastomère recyclé, dans laquelle le matériau en poudre ou mis en pastilles est de préférence fourni par un procédé pour recycler des pneumatiques usagés, de préférence des pneumatiques pour camions, ou des parties de ceux-ci, de préférence des bandes de roulement de pneumatiques.

3. Composition réticulable selon l'une quelconque des revendications 1 et 2, dans laquelle le matériau en poudre ou mis en pastilles comprend un caoutchouc naturel réticulé en une quantité d'au moins 25 % en poids ou plus, par exemple de 25 % en poids à 70 % en poids, par rapport au poids total du matériau en poudre ou mis en pastilles.

4. Composition réticulable selon l'une quelconque des revendications 1 à 3, dans laquelle l'au moins un poly-C₅-C₁₅ alcénamère comprend un polyocténamère, de préférence un polyocténamère avec un rapport de doubles liaisons trans/cis d'au moins 60:40, de préférence 70:30 ou plus, par exemple dans la plage de 75:25 à 90:10.

5. Composition réticulable selon l'une quelconque des revendications 1 à 4, dans laquelle l'au moins un poly-C₅-C₁₅-alcénamère a un poids moléculaire moyen en poids (M_{w}), déterminé par chromatographie à perméation de gel en utilisant des étalons de polystyrène, dans la plage de 10 000 à 250 000 g/mole, de préférence dans la plage de 80 000 à 180 000 g/mole, et/ou l'au moins un poly-C₅-C₁₅-alcénamère, dans des conditions normales (20 °C, 101,3 kPa), a une fraction cristalline d'au moins 20 %, par exemple de 25 à 35 %, et/ou l'au moins un poly-C₅-C₁₅-alcénamère, dans des conditions normales, a un point de fusion dans la plage de 30 °C à 100 °C, par exemple dans la plage de 40 °C à 70 °C.

6. Composition réticulable selon l'une quelconque des revendications 1 à 5, dans laquelle la composition comprend l'au moins un poly-C₅-C₁₅ alcénamère (b) et l'au moins un polybutadiène (c) en une quantité totale de 5 parties en poids ou plus, sur la base de 100 parties en poids du matériau en poudre ou mis en pastilles (a), et/ou dans laquelle le rapport pondéral du poly-C₅-C₁₅-alcénamère (b) sur polybutadiène (c) est dans la plage de 1:5 à 5:1 et/ou l'au moins un poly-C₅-C₁₅-alcénamère est utilisé en une quantité de plus de 3 parties en poids, sur la base de 100 parties en poids du matériau en poudre ou mis en pastilles (a).

7. Composition réticulable selon l'une quelconque des revendications 1 à 6, l'au moins un polybutadiène (c) ayant un poids moléculaire moyen en poids (M_{w}), déterminé par chromatographie à perméation de gel en utilisant des étalons de polystyrène, de 10 000 g/mole ou moins, de préférence de 5 000 g/mol ou moins, par exemple dans la plage de 1 000 à 5 000 g/mole, et/ou dans laquelle l'au moins un polybutadiène (c) possède un indice d'iode, déterminé selon la norme DIN 53241-1, dans la plage de 100 à 1 000 g d'iode/100 g, par exemple dans la plage de 300 à 600 g d'iode/100 g.

8. Composition réticulable selon l'une quelconque des revendications 1 à 7, dans laquelle l'au moins un polybutadiène (c) a des groupes fonctionnels terminaux, dans laquelle les groupes fonctionnels terminaux sont de préférence choisis parmi des groupes hydroxyle et des groupes silane, par exemple des groupes alcoxysilane.

9. Composition réticulable selon l'une quelconque des revendications 1 à 8, dans laquelle l'au moins un agent de réticulation comprend du soufre ou un peroxyde, préférablement du soufre, et/ou la composition réticulable, telle que souhaitée, comprend en outre un ou plusieurs adjuvants de réticulation, le ou les adjuvants de réticulation comprenant de préférence un ou plusieurs composants choisis parmi des accélérateurs, des activateurs, des dispersants, des agents complexants et des retardateurs.

10. Composé élastomère pouvant être obtenu par réticulation de la composition réticulable selon l'une quelconque des revendications 1 à 9 précédentes.

11. Article comprenant un composé élastomère selon la revendication 10.

12. Article selon la revendication 11, dans lequel l'article est une balle, de préférence une balle de tennis.

13. Procédé de fabrication d'un composé élastomérique ou d'un article le comprenant, le procédé comprenant : fourniture d'une composition réticulable selon l'une quelconque des revendications 1 à 9, et réticulation de la composition réticulable.

14. Procédé selon la revendication 13, dans lequel la réticulation est effectuée à une température dans la plage de 140 °C à 200 °C et/ou pendant une durée de 60 minutes ou moins, et/ou le procédé comprenant en outre la mise en forme de la composition réticulable pour former l'article avant, pendant et/ou après la réticulation.

15. Utilisation d'au moins un poly-C₅-C₁₅-alcénamère en combinaison avec au moins un polybutadiène liquide pour le traitement d'un élastomère sous forme particulaire.
